# EUROPÄISCHE PATENTSCHRIFT

(11) **EP 1 273 697 B1**
(45) Veröffentlichungstag und Bekanntmachung des Hinweises auf die Patenterteilung: **18.01.2006**
(21) Anmeldenummer: 02013117.3
(22) Anmeldetag: 14.06.2002
(51) Int. Cl.: D21D 5/26, B01D 19/00

(54) **Verfahren und Vorrichtung zum Entgasen von Suspension, insbesondere von Faserstoffsuspension**
Method and device for degassing suspension, especially fibrous suspension
Dispositif de dégazage de suspension, notamment de suspension fibreuse

(30) Priorität: 02.07.2001 DE 10131982
(43) Veröffentlichungstag der Anmeldung: 08.01.2003
(73) Patentinhaber: Voith Paper Patent GmbH, 89522 Heidenheim (DE)
(72) Erfinder: Beuermann, Karl-Heinz, 89518 Heidenheim (DE)

(56) Entgegenhaltungen:
- DE-A- 4 234 522
- DE-U- 20 008 711
- US-A- 3 206 917
- US-A- 3 538 680

## Beschreibung

Die Erfindung betrifft eine Vorrichtung zum Entgasen von Suspension, insbesondere von Faserstoffsuspension, bestehend aus einem vorzugsweise langgestreckten und liegenden zylindrischen Behälter mit einer horizontalen oder annähernd horizontalen Behälterachse und einer Behälteraußenwand, mit mindestens einem vorzugsweise zu der Behälterachse parallelen oder annähernd parallelen Verteilungsrohr, das außerhalb oder innerhalb des Behälters liegt und von dem mindestens ein Strahlrohr, vorzugsweise eine Mehrzahl von aufeinanderfolgenden Strahlrohren, zum Zuführen von Suspension in den Behälter ausgeht, und/oder mit mindestens einer mit dem Behälter kommunizierenden und ihm Suspension zuführenden Kammer, wobei die kommunizierende Kammer im wesentlichen oberhalb des Flüssigkeitsstands der zugeführten Suspension im Behälter liegt, mit mindestens einer vorzugsweise im mittleren Bereich des Behälters angebrachten Austrittsöffnung für mindestens eine gasfreie Suspension, mit mindestens je einer im Behälter angebrachten Austrittsöffnung für mindestens ein abgeschiedenes Gas und für mindestens eine mittels mindestens eines Überlaufs abgeschiedene, überschüssige Suspension und mit Mitteln zum Erzeugen eines Unterdrucks im Behälter.

Weiterhin betrifft die Erfindung ein Verfahren zum Entgasen von Suspension, insbesondere von Faserstoffsuspension, wobei einem unter Unterdruck stehenden Behälter Suspension zugeführt wird und gasfreie Suspension vorzugsweise im mittleren Bereich des Behälters, abgeschiedenes Gas vorzugsweise im oberen Innenbereich des Behälters und abgeschiedene, überschüssige Suspension über mindestens einen Überlauf abgeführt wird.

Der Begriff "Suspension" kann im weiteren Sinne der vorliegenden Erfindung auch Siebwasser mit den wesentlichen Bestandteilen Feinstoff und Asche oder geklärtes Wasser mit einem minimalen Feinstoff- und Ascheanteil umfassen.
Auch der Behälter kann jede beliebige Raumform, beispielsweise die Form eines Quaders, einer Kugel oder mindestens eine Schale, annehmen. Die Raumform des Behälters in der vorliegenden Erfindung beschränkt sich somit nicht auf eine langgestreckte und liegende zylindrische Raumform.

Verfahren und Vorrichtungen zum Entgasen von Suspensionen, insbesondere von Faserstoffsuspensionen im Bereich der Papier- oder Kartonherstellung, sind den Fachleuten der Branche bestens bekannt.
Ihrem Namen nach sollen die Vorrichtungen Suspensionen entgasen. Gleichzeitig werden durch die Vorrichtungen auch andere leichte Verunreinigungen entfernt, die ansonsten die Papier- oder Kartonherstellung stören würden.
Die Vorrichtungen sind große Behälter, den die der Papier- oder Kartonmaschine aufzugebende Suspension als dünnes Gemisch zugeführt wird. Das Funktionsprinzip der jeweiligen Vorrichtung besteht darin, die Suspension unter Unterdruck sieden zu lassen und das Gas dadurch in einen sogenannten Gasraum und aus dem Behälter abzuscheiden und die anderen leichten Verunreinigungen auf der Flüssigkeitsoberfläche im Behälter ausscheiden zu lassen. Die der Papier- oder Kartonmaschine zuzuführende Suspension wird dagegen durch eine Öffnung im Behälterboden entnommen, was natürlich mit dem Gedanken verbunden ist, möglichst gasfreie Suspension aus dem Behälter abzuleiten. Um die Entgasungsfähigkeit der Vorrichtung zu maximieren, wird im Behälter mittels einer Unterdruckpumpe, vorzugsweise einer Vakuumpumpe, ein Unterdruck erzeugt, wobei das Gas durch die Unterdruckpumpe mit Leitung aus dem Behälter entweicht. Darüber hinaus wird die Entgasungsfähigkeit verbessert, indem die zugeführte, noch Gas enthaltende Suspension durch Strahlrohre oberhalb des Flüssigkeitsstands im Behälter zugegeben wird, wobei das in der zugegebenen Suspension eventuell als Blasen vorhandene Gas bereits abgeschieden wird, bevor die zugegebene Suspension mit der bereits vorhandenen Suspension in Verbindung kommt.
Ein vorzugsweise einziger Überlauf dient zur Stabilisierung des Flüssigkeitsstands im Behälter, wobei über dessen Kante im Regelfall sowohl ungefähr ein Teilstrom von ungefähr 1 % bis 10 % der in den Behälter eingebrachten Gesamtmenge an Suspension als auch auf der Flüssigkeitsoberfläche des Behälters angesammelte leichte Verunreinigungen fließen. Die abgeschiedene, überschüssige Suspension samt leichter Verunreinigungen fließt anschließend zur Weiterbehandlung (Cleaner oder Sortierer), wo man bestrebt ist, die leichten Verunreinigungen aus der Suspension abzuscheiden und die Suspension in den Kreislauf zurückzuführen.

Die deutsche Offenlegungsschrift DE 42 34 522 A1 offenbart eine in der Papier- und Zelfstoffindustrie verwendete Vorrichtung zum Entgasen von Suspension (Entgasungsbehälter) gemäß dem vorgenannten Oberbegriff der vorliegenden Erfindung. Die den Überlauf für die abgeschiedene, überschüssige Suspension bildende Trennwand ist dabei im wesentlichen auf gleicher Höhe mit der Hinterkante des Ablaufstutzens für gasfreie Suspension senkrecht zur Behälterachse angeordnet und der Überlauf für die abgeschiedene, überschüssige Suspension selbst ist vorzugsweise zum Ablaufstutzen hin entgegen der Strömungsrichtung im Behälter geneigt oder gebogen.
Weitere Offenbarungen hinsichtlich der Lage und der Form der den Überlauf für die abgeschiedene, überschüssige Suspension bildenden Trennwand lassen sich in der deutschen Offenlegungsschrift DE 32 19 740 A1, in der PCT-Anmeldung WO 97/15717 A1 und dem US-Patent 5,868,905 der Anmelderin finden.
Allen bislang genannten Schriften sind hinsichtlich des Überlaufs für die abgeschiedene, überschüssige Suspension die Nachteile gemeinsam, dass die Trennwand senkrecht und symmetrisch zur Behälterachse (Längsachse) angeordnet ist, dass ihre Lage aufgrund ihrer Form konstruktiv vorgegeben ist, dass heisst, dass sie in einem der beiden Endbereiche des Behälters plaziert ist, und das desweiteren auch ihre Überlauflänge konstruktiv vorgeben ist.

Die deutsche Patentanmeldung DE 200 08 711.8 der Anmelderin offenbart ebenfalls eine Vorrichtung zum Entgasen von Suspension. Dabei ist vorgesehen, dass der mindestens einen Austrittsöffnung für die abgeschiedene, überschüssige Suspension -in Strömungsrichtung derselben gesehen- ein als Überlaufrohr ausgebildeter Überlauf mit einer Überlaufhöhe und einer Überlauflänge vorgeordnet ist.
Diese Vorrichtung erlaubt zwar ein größeres Maß an Freiheit in Bezug auf Lage und Form des Überlaufs, sie erlaubt jedoch keine strömungstechnisch optimale Anordnung des Überlaufs zwischen Zuführung von Suspension und Abführung von gasfreier Suspension.

Es ist also Aufgabe der Erfindung, ein Verfahren und eine Vorrichtung der eingangs genannten Art zu schaffen, mit welchen der Überlauf für die abgeschiedene, überschüssige Suspension in einer strömungstechnisch optimalen Lage und Form zwischen Zuführung von Suspension und Abführung von gasfreier Suspension bei weiterer Verbesserung der Hydraulik und bei niedrigen Vorrichtungskosten angeordnet werden kann.

Erfindungsgemäß wird diese Aufgabe bei einer Vorrichtung gemäß dem Oberbegriff des Anspruchs 1 dadurch gelöst, dass der Überlauf als mindestens ein in der Behälteraußenwand angebrachter und parallel zur Behälterachse verlaufender Überlauf mit einer Überlaufkante ausgebildet ist und dass dem Überlauf mindestens ein Überlaufsystem zur Abführung der abgeschiedenen, überschüssigen Suspension nachgeordnet ist.
Durch diese Ausgestaltung des Überlaufs wird die Möglichkeit geschafften, ihn definitiv in strömungstechnisch optimaler Lage zwischen Zuführung von Suspension und Abführung von gasfreier Suspension bei weiterer Verbesserung der Hydraulik anzuordnen, wobei zudem noch der Vorteil niedriger Vorrichtungskosten erzielt wird.

Weiterhin wird erfindungsgemäß vorgeschlagen, dass der in der Behälteraußenwand angebrachte Überlauf im wesentlichen umlaufend am Behälter angebracht ist. Hierbei wird der Vorteil einer gleichmäßigen Abführung von abgeschiedener, überschüssiger Suspension im kompletten Umfangsbereich des Behälters erreicht.

In Fortführung des Erfindungsgedankens ist der Überlauf im oder annähernd im Bereich der Austrittsöffnung, vorzugsweise mittig zur Austrittsöffnung, für die gasfreie Suspension in der Behälteraußenwand ausgebildet. Hierdurch wird die Hydraulik der Vorrichtung weiters verbessert, da die zugeführte Suspension im unteren Bereich gasfrei und im oberen Bereich der gasfreie Überschuss abgeführt wird.

In einer Ausgestaltung der Erfindung ist vorgesehen, dass der Überlauf in Form von mindestens zwei Einzelüberläufen beidseitig in der Behälteraußenwand mit mindestens je einer Einzelüberlaufkante ausgebildet ist. Durch diese strömungstechnische Symmetrie der Abführung der abgeschiedenen, überschüssigen Suspension werden ideale Voraussetzungen für eine verbesserte Hydraulik bei gutem Systemwirkungsgrad geschaffen.

im Hinblick auf einen guten Systemwirkungsgrad bei niedrigen Vorrichtungskosten ist es von Vorteil, wenn der Überlauf eine Überlaufkante mit einer Gesamt-Überlaufkantenlänge im Bereich von 1 m bis 10 m, vorzugsweise von 2 m bis 7 m, und/oder eine offene Gesamt-Überlauffläche im Bereich von 0,3 m² bis 6 m², vorzugsweise von 0,4 m² bis 5 m², aufweist
Dabei weist die Überlauffläche des Einzelüberlaufs eine strömungstechnisch optimale Außenkontur, vorzugsweise die Form eines Rechtecks, eines Kreises, eines Ovals oder eines regelmäßigen oder eines unregelmäßigen Polygons, auf.

Sind erfindungsgemäß mehrere Überlaufflächen, insbesondere Kreise, von Einzelüberläufen in der Behälteraußenwand eingebracht, so sind diese in vorzugsweise regelmäßigen Abständen (Teilungen) voneinander entlang einer Mittellinie in der Behälteraußenwand ausgebildet, da hierbei eine Verbesserung der Hydraulik positiv unterstützt wird.
Idealerweise münden die Einzelüberläufe einzeln oder gruppenweise oder sektioniert direkt mittels mindestens eines Überlaufrohrs oder mittels mindestens einer in der Behälteraußenwand mittels mindestens einer als Halbschale ausgebildeten Überlaufkammer und mindestens einem nachgeordneten Überlaufrohr in das vorzugsweise unterhalb des Behälters angeordnete Überlaufsystem ein, da diese Art der Zuleiftang kostengünstig und prozesssicher realisierbar ist.

In einer vorteilhaften Ausführung der Erfindung wird vorgeschlagen, dass der Austrittsöffnung für die gasfreie Suspension -in Strömungsrichtung der gasfreien Suspension gesehen- ein hydraulischer Stabilisator nachgeordnet ist. Dieser Stabilisator, der beispielsweise als ein Verweilbehälter mit bestimmten strömungstechnischen Eigenschaften ausgebildet ist, weist eine Pufferkapazität für die gasfreie Suspension auf und verhindert dadurch zusätzlich das Entstehen von Pulsationen, die für den nachfolgenden Herstellungsprozess in einer Papier- oder Kartonmaschinen überaus von Nachteil sind.

Weiterhin ist es erfindungsgemäß vorteilhaft, wenn die Mittel zum Erzeugen des Unterdrucks im Behälter je ein Unterdruckanschluss, je eine Unterdruckleitung und mindestens eine Unterdruckpumpe mit Leitung sind und vorzugsweise im oberen Innenbereich des Behälters angebracht sind. Es ist platt selbstverständlich, dass mehrere Unterdruckanschlüsse jeweils einzeln mit einer separaten Unterdruckleitung und einer separaten Unterdruckpumpe mit Leitung als auch mit einzelnen Unterdruckleitungen und einer gemeinsamen Unterdruckpumpe mit Leitung betrieben werden können.

In einer weiteren vorteilhaften Ausgestaltung der Erfindung ist vorgesehen, dass im oberen Innenbereich des Behälters mehrere Düsen zur Anfeuchtung der nicht mit Suspension berührten Behälterinnenoberfläche angebracht sind, wodurch der im Behälter ablaufende Prozess des Entgasens der Suspension positiv hinsichtlich Prozessgeschwindigkeit und -wirkungsgrad beeinflusst wird. Weiterhin werden durch die Anfeuchtung feste Belegungen mit Faserfeinstoff oder Asche vermieden.

Weiterhin ist es erfindungsgemäß vorteilhaft, wenn das Verteilungsrohr zu der Behälterachse parallel oder annähernd parallel liegt. Das Verteilungsrohr kann ferner außerhalb oder innerhalb des Behälters liegen. Durch diese Ausgestaltung ergeben sich sowohl räumliche (Raumbedarf) als auch technologische (Verteilungsgleichmäßigkeit) Vorteile.

Erfindungsgemäß wird diese Aufgabe bei einem Verfahren gemäß dem Oberbegriff des Anspruchs 16 dadurch gelöst, dass die abgeschiedene, überschüssige Suspension seitlich über einen in der Behälteraußenwand angebrachten und vorzugsweise parallel zur Behälterachse verlaufenden Überlauf mit einer Überlaufkante abgeführt wird.
Durch dieses erfindungsgemäße Verfahren wird die Möglichkeit geschafften, den Überlauf definitiv in strömungstechnisch optimaler Lage zwischen Zuführung von Suspension und Abführung von gasfreier Suspension bei weiterer Verbesserung der Hydraulik anzuordnen, wobei zudem noch der Vorteil niedriger Vorrichtungskosten erzielt wird.

Weitere Merkmale und Vorteile der Erfindung ergeben sich aus den Unteransprüchen und der nachfolgenden Beschreibung bevorzugter Ausführungsbeispiele unter Bezugnahme auf die Zeichnung.

Es zeigen
- Figur 1:: eine schematisierte und geschnittene Vorderansicht quer zur Behälterachse einer ersten vorteilhaften Ausführungsform der erfindungsgemäßen Vorrichtung zum Entgasen einer Suspension;
- Figur 2a:: eine schematisierte und geschnittene Draufsicht auf eine zweite vorteilhafte Ausführungsform der erfindungsgemäßen Vorrichtung;
- Figur 2b:: eine Vorderansicht der zweiten vorteilhaften Ausführungsform der erfindungsgemäßen Vorrichtung gemäß Figur 2a;
- Figuren 3 bis 5:: drei schematisierte und geschnittene Draufsichten auf drei weitere vorteilhafte Ausführungsformen der erfindungsgemäßen Vorrichtung;
- Figur 6:: eine Ansicht von Einzelüberläufen gemäß der Figur 5; und
- Figuren 7a bis 7d:: verschiedenen Formen von erfindungsgemäßen Überlaufflächen.

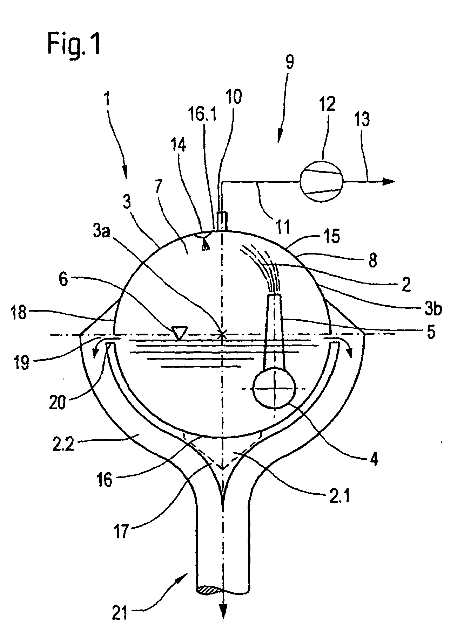

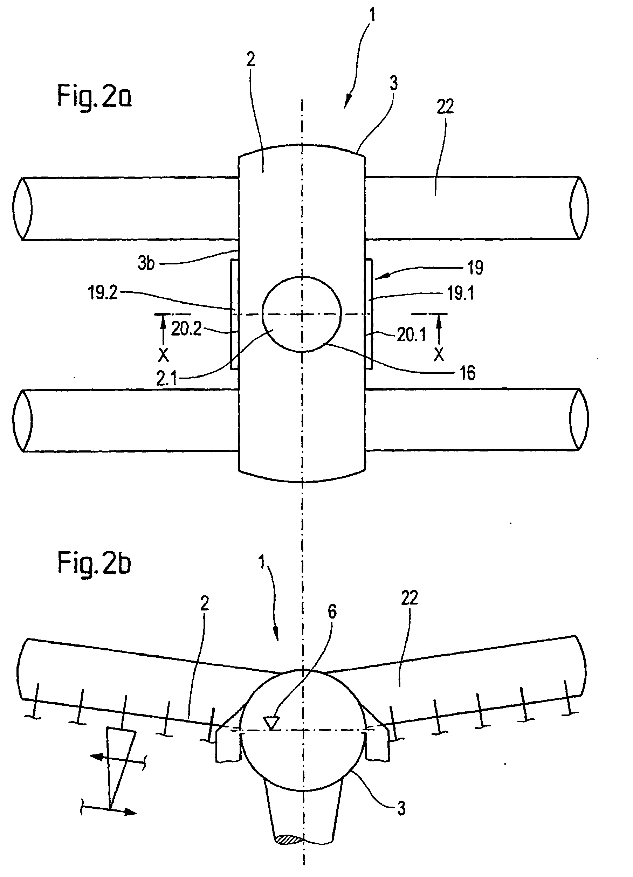

Die Figur 1 zeigt eine schematisierte und geschnittene Vorderansicht quer zur Behälterachse 3a einer Vorrichtung 1 zum Entgasen einer Suspension 2, bestehend aus einem langgestreckten und liegenden zylindrischen Behälter 3 mit einer Behälterachse 3a und einer Behälteraußenwand 3b, dem die der Papier- oder Kartonmaschine aufzugebende Suspension 2 als dünnes Gemisch über mindestens ein vorzugsweise zu der Behälterachse 3a paralleles Verteilungsrohr 4, von dem eine Mehrzahl von aufeinanderfolgenden Strahlrohren 5 zum Zuführen von Suspension 2 in den Behälter 3 ausgehen, zugeführt wird. Um die Entgasungsfähigkeit der Vorrichtung 1 zu verbessern, wird die zugeführte, noch Gas enthaltende Suspension 2 durch Strahlrohre 5 oberhalb des Flüssigkeitsstands 6 im Behälter 3 eingegeben, wobei das in der zugegebenen Suspension 2 eventuell als Blasen vorhandene Gas 7 bereits abgeschieden wird, bevor die zugegebene Suspension 2 mit der bereits im Behälter 3 vorhandenen Suspension 2 in Verbindung kommt. Die Strahlrohre 5 enden in dargestellter und bevorzugter Ausführung kurz vor der Behälterdecke 8, wodurch der Entgasungsprozess der Suspension 2 nochmals positiv unterstützt wird, da die Suspension 2 an die Behälterdecke 8 prallt. Die Zuführung der Suspension 2 kann auch, wie in Figur 2 dargestellt und näher beschrieben, mittels eines Kammernsystems erfolgen. Im vorzugsweise oberen Bereich der Behälterdecke 8 (oberer Innenbereich des Behälters) ist an einer Austrittsöffnung 16.1 ein Mittel 9 zum Erzeugen eines Unterdrucks, vorzugsweise ein Unterdruckanschluss 10 mit einer Unterdruckleitung 11, angebracht, die wiederum an eine Unterdruckpumpe 12 mit einer weiterführenden, nicht vollständig dargestellten Leitung 13 angeschlossen ist; der Unterdruckanschluss 10 kann alternativ auch im seitlichen Bereich der Behälterdecke 8 angebracht sein. Durch den Anschluss des Behälters 3 an die Unterdruckpumpe 12 wird die Entgasungsfähigkeit der Vorrichtung 1 maximiert, wobei das abgeschiedene Gas 7 durch die Unterdruckpumpe 12 aus dem Behälter 3 gepumpt wird. Weiterhin sind im den Strahlrohren 5 abgewandten Bereich der Behälterdecke 8 mehrere, nicht näher dargestellte Düsen 14 zur Anfeuchtung der nicht mit Suspension 2 berührten Behälterinnenoberfläche 15 angebracht. Durch diese Maßnahme wird der im Behälter 3 ablaufende Entgasungsprozess der Suspension 2 positiv hinsichtlich Prozessgeschwindigkeit und -wirkungsgrad beeinflusst. In dem Verteilungsrohr 4 abgewandten Teil des Behälters 3 ist sowohl eine Austrittsöffnung 16, die in ein anfänglich dargestelltes Leitungssystem 17 zur Ableitung der gasfreien Suspension 2.1 mündet, als auch eine Austrittsöffnung 18 für mindestens eine mittels mindestens eines Überlaufs 19 abgeschiedene, überschüssige Suspension 2.2 angeordnet.
Erfindungsgemäß ist die Vorrichtung 1 nun dadurch gekennzeichnet, dass der Überlauf 19 als mindestens ein in der Behälteraußenwand 3b angebrachter und parallel zur Behälterachse 3a verlaufender Überlauf 19 mit einer Überlaufkante 20 ausgebildet ist und dass dem Überlauf 19 mindestens ein Überlaufsystem 21 zur Abführung der abgeschiedenen, überschüssigen Suspension 2.2 nachgeordnet ist.
In vorteilhafter Weise ist der Austrittsöffnung 16 für die gasfreie Suspension 2.1 -in Strömungsrichtung der gasfreien Suspension 2.1 gesehen- ein hydraulischer Stabilisator nachgeordnet. Ein derartiger hydraulischer Stabilisator ist in der deutschen Offenlegungsschrift DE 199 46 575 A1 der Anmelderin ausführlich offenbart. Der Inhalt dieser Offenlegungsschrift wird hiermit zum Gegenstand der vorliegenden Beschreibung gemacht; von einer weitergehenden Beschreibung des hydraulischen Stabilisators wird damit Abstand genommen.

Eine schematisierte und geschnittene Draufsicht auf eine zweite vorteilhafte Ausführungsform der erfindungsgemäßen Vorrichtung 1 zum Entgasen einer Suspension 2 ist in Figur 2 dargestellt. Der Behälter 3 samt Bauteile und -gruppen der dargestellten Vorrichtung 1 ist dem Fachmann der Branche bekannt; er ist auch in der US-Patentschrift US 3,538,680 (≈ DE-A 17 61 496) offenbart. Der Inhalt dieser genannten US-Patentschrift wird hiermit zum Gegenstand dieser Beschreibung gemacht. Die Zuführung der Suspension 2 in den Behälter 3 erfolgt mittels vier mit dem Behälter 3 kommunizierenden und ihm Suspension 2 zuführenden Kammern 22, wobei nur vier Kammern 22 schematisch angedeutet sind. Die kommunizierenden Kammern 22 liegen im wesentlichen oberhalb des Flüssigkeitsstands 6 (Figur 2b) der zugeführten Suspension 2 im Behälter 3.
Erfindungsgemäß ist nun vorgesehen, dass der Überlauf im oder annähernd im Bereich der Austrittsöffnung 16 für die gasfreie Suspension 2.1 in der Behälteraußenwand 3b ausgebildet ist. Idealerweise ist der Überlauf 19, wie in Figur 2a dargestellt, mittig zur Austrittsöffnung 16 für die gasfreie Suspension 2.1 in der Behälteraußenwand 3b ausgebildet.
Weiterhin ist vorgesehen, dass der Überlauf 19 in Form von mindestens zwei Einzelüberläufen 19.1, 19.2 beidseitig in der Behälteraußenwand 3b mit mindestens je einer Einzelüberlaufkante 20.1, 20.2 ausgebildet ist.

Die Figur 2b zeigt eine Vorderansicht der zweiten vorteilhaften Ausführungsform der erfindungsgemäßen Vorrichtung 1 gemäß Figur 2a (Schnitt X-X), wobei klar zu erkennen ist, dass die kommunizierenden Kammern 22 im wesentlichen oberhalb des Flüssigkeitsstands 6 (Figur 2b) der zugeführten Suspension 2 im Behälter 3 liegen.

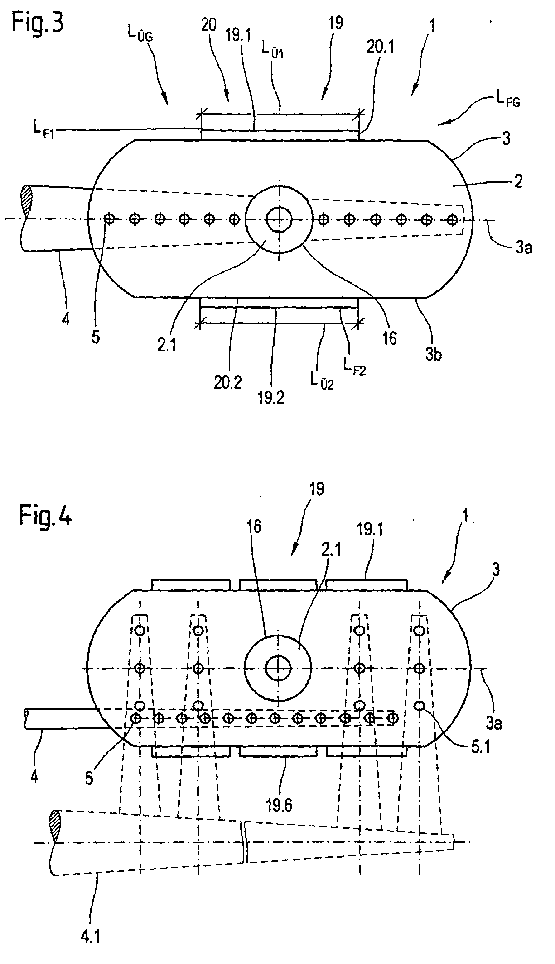

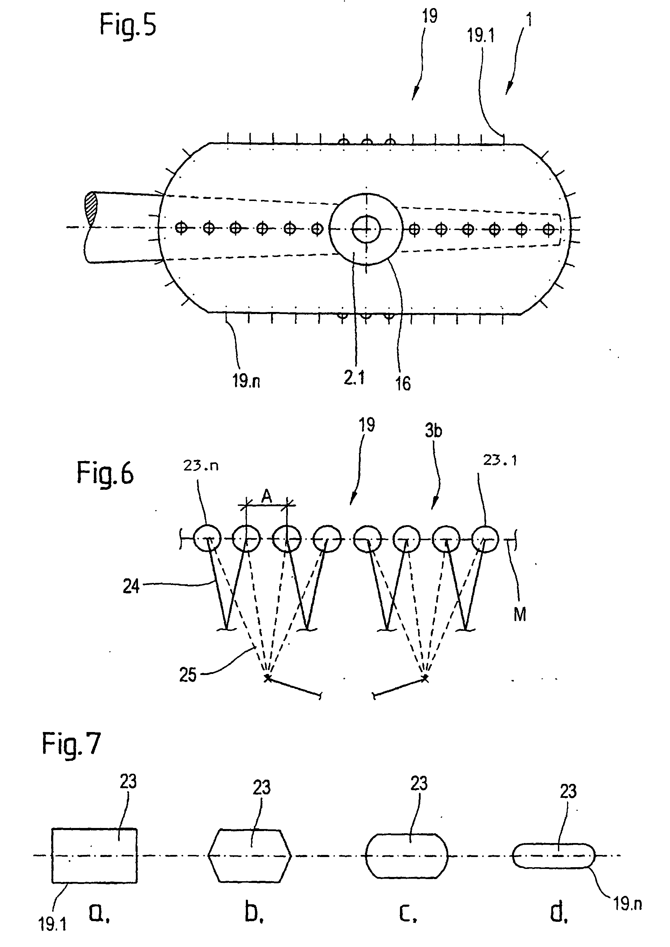

Die Figuren 3 bis 5 zeigen drei schematisierte und geschnittene Draufsichten auf drei weitere vorteilhafte Ausführungsformen der erfindungsgemäßen Vorrichtung 1.
Die Figur 3 zeigt die Vorrichtung 1 mit einem Überlauf 19, der aus zwei beidseitig in der Behälteraußenwand 3b des Behälters 3 angebrachten Einzelüberläufen 19.1, 19.2, die mittig zur Austrittsöffnung 16 für die gasfreie Suspension 2.1 angeordnet sind, besteht.
Erfindungsgemäß weist der Überlauf 19 eine Überlaufkante 20, bestehend aus zwei Einzelüberlaufkanten 20.1, 20.2, mit einer Gesamt-Überlaufkantenlänge L_{ÜG} (Summe aus den Einzel-Überlaufkantenlängen L_{Ü1} und L_{Ü2}) im Bereich von 1 m bis 10 m, vorzugsweise von 2 m bis 7 m, und eine offene Gesamt-Überlauffläche F_{ÜG} (Summe aus den Einzel-Überlaufflächen F_{Ü1} und F_{Ü2}) im Bereich von 0,3 m² bis 6 m², vorzugsweise von 0,4 m² bis 5 m², auf.
Weiterhin liegt erfindungsgemäß das Verteilungsrohr 4, von dem eine Mehrzahl von aufeinanderfolgenden Strahlrohren 5 zum Zuführen von Suspension 2 in den Behälter 3 ausgehen, zu der Behälterachse 3a parallel oder annähernd parallel und außerhalb, in vorliegender Ausgestaltung unterhalb, des Behälters 3.
Auch die Figur 4 zeigt die Vorrichtung 1 mit einem Überlauf 19, der aus insgesamt sechs beidseitig in der Behälteraußenwand 3b des Behälters 3 angebrachten Einzelüberläufen 19.1 bis 19.6, die mittig zur Austrittsöffnung 16 für die gasfreie Suspension 2.1 angeordnet sind, besteht.
Weiterhin liegt erfindungsgemäß das Verteilungsrohr 4, von dem eine Mehrzahl von aufeinanderfolgenden Strahlrohren 5 zum Zuführen von Suspension 2 in den Behälter 3 ausgehen, zu der Behälterachse 3a parallel oder annähernd parallel und innerhalb des Behälters 3.
Jedoch kann das mindestens eine Verteilungsrohr 4.1 auch vorzugsweise parallel zur Behälterachse 3a verlaufen und dabei in abgewinkelter Bauform in oder unter den Behälter 3 verlaufen. Von dem abgewinkelten Verteilungsrohr 4.1 können dann die Strahlrohre 5.1 in den Behälter 3 laufen. Diese Ausführungsform ist in Figur 4 in gestrichelter Weise dargestellt. Sollte der Behälter 3 die Raumform einer Kugel oder mindestens einer Schale mit Verschlussfläche aufwelsen, so können die Strahlrohre auch vorzugsweise kreisförmig auf dem mindestens einen Verteilungsrohr angebracht sein.
Weiterhin zeigt die Figur 5 eine Vorrichtung 1 mit einem Überlauf 19, der aus einer Vielzahl an Einzelüberläufen 19.1 bis 19.n, die mittig zur Austritezöffnung 16 für die gasfreie Suspension 2.1 angeordnet sind, besteht. In Weiterführung des Erfindungsgedankens ist es jedoch auch möglich, dass der in der Behälteraußenwand angebrachte Überlauf 19 im wesentlichen umlaufend am Behälter angebracht ist, wie es in Figur durch die im Endbereich außenliegenden Striche angedeutet ist,
Es ist generell anzumerken, dass die Anordnung der Einzelüberläufe nicht unbedingt mittig zur Austrittsöffnung für die gasfreie Suspension zu erfolgen hat, diese mittige Anordnung jedoch hydraulische Vorteile mit sich bringt.

Die Figur 6 zeigt eine Ansicht von Einzelüberläufen 19.1 bis 19.n gemäß der Figur 5.
Erfindungsgemäß ist vorgesehen, dass der Überlauf 19 aus mehreren Einzelüberläufen 19.1 bis 19.n, die bevorzugte Überlaufflächen 23.1 bis 23.n aufweisen, besteht.
Die bevorzugten Überlaufflächen 23.1 bis 23.n sind in Figur 6 Kreise, die in vorzugsweise regelmäßigen Abständen A (Teilungen) voneinander entlang einer Mittellinie M in der Behälteraußenwand 3b ausgebildet sind.
Die Einzelüberläufe 19.1 bis 19.n münden einzeln oder gruppenweise (24) oder sektioniert (25) direkt mittels mindestens eines nicht dargestellten Überlaufrohrs oder mittels mindestens einer in der Behälteraußenwand mittels mindestens einer als Halbschale ausgebildeten und nicht dargestellten Überlaufkammer und mindestens einem nachgeordneten und nicht dargestellten Überlaufrohr in das vorzugsweise unterhalb des nicht dargestellten Behälters angeordnete und nicht dargestellte Überlaufsystem ein.

Die Figuren 7a bis 7d zeigen verschiedene Formen von erfindungsgemäßen Überlaufflächen 23.
Erfindungsgemäß ist vorgesehen, dass die Überlauffläche 23 des Einzelüberlaufs 19.1 bis 19.n die Form eines Rechtecks (Figur 7a), eines Kreises, eines Ovals oder eines regelmäßigen oder eines unregelmäßigen Polygons (Figuren 7b bis 7d) aufweist.

Der erfindungsgemäße Vorrichtung zum Entgasen von Suspension, insbesondere von Faserstoffsuspension, eignet sich in vorzüglicher Art und Weise zur Durchführung des erfindungsgemäßen Verfahrens zum Entgasen von Suspension, insbesondere von Faserstoffsuspension.

Zusammenfassend ist festzuhalten, dass durch die Erfindung ein Verfahren und eine Vorrichtung der eingangs genannten Art geschaffen wird, mit welchen der Überlauf für die abgeschiedene, überschüssige Suspension in einer strömungstechnisch optimalen Lage und Form zwischen Zuführung von Suspension und Abführung von gasfreier Suspension bei weiterer Verbesserung der Hydraulik und bei niedrigen Vorrichtungskosten angeordnet werden kann.

### Bezugszeichenliste

- 1: Vorrichtung (zum Entgasen von Suspension)
- 2: Suspension
- 2.1: Gasfreie Suspension
- 2.2: Abgeschiedene, überschüssige Suspension
- 3: Behälter
- 3a: Behälterachse
- 3b: Behälteraußenwand
- 4, 4.1: Verteilungsrohr
- 5, 5.1: Strahlrohr
- 6: Flüssigkeitsstand
- 7: Gas
- 8: Behälterdecke
- 9: Mittel
- 10: Unterdruckanschluss
- 11: Unterdruckleitung
- 12: Unterdruckpumpe
- 13: Leitung
- 14: Düse
- 15: Behälterinnenoberfläche
- 16, 16.1, 18: Austrittsöffnung
- 17: Leitungssystem
- 19: Überlauf
- 19.1 bis 19.n: Einzelüberlauf
- 20: Überlaufkante
- 20.1, 20.2: Einzelüberlaufkante
- 21: Überlaufsystem
- 22: Kammer
- 23, 23.1 bis 23.n: Überlauffläche

- A: Abstand (Teilung)
- F_{ÜG}: Gesamt-Überlauffläche
- F_{Ü1} und F_{Ü2}: Einzel-Überlauffläche
- L_{Ü1} und L_{Ü2}: Einzel-Überlaufkantenlänge
- L_{ÜG}: Gesamt-Übertaufkantenlänge
- M: Mittellinie
- X-X: Schnitt

## Patentansprüche

1. Vorrichtung (1) zum Entgasen von Suspension (2), insbesondere von Faserstoffsuspension, bestehend aus
- einem vorzugsweise langgestreckten und liegenden zylindrischen Behälter (3) mit einer horizontalen oder annähernd horizontalen Behälterachse (3a) und einer Behälteraußenwand (3b);
- mit mindestens einem vorzugsweise zu der Behälterachse (3a) parallelen oder annähernd parallelen Verteilungsrohr (4), das außerhalb oder innerhalb des Behälters (3) liegt und von dem mindestens ein Strahlrohr (5), vorzugsweise eine Mehrzahl von aufeinanderfolgenden Strahlrohren (5), zum Zuführen von Suspension (2) in den Behälter (3) ausgeht, und/oder mit mindestens einer mit dem Behälter (3) kommunizierenden und ihm Suspension (2) zuführenden Kammer (22), wobei die kommunizierende Kammer (22) im wesentlichen oberhalb des Flüssigkeitsstands (6) der zugeführten Suspension (2) im Behälter (3) liegt;
- mit mindestens einer vorzugsweise im mittleren Bereich des Behälters (3) angebrachten Austrittsöffnung (16) für mindestens eine gasfreie Suspension (2.1);
- mit mindestens je einer im Behälter (3) angebrachten Austrittsöffnung (16.1, 18) für mindestens ein abgeschiedenes Gas (7) und für mindestens eine mittels mindestens eines Überlaufs (19, 19.1 bis 19.n) abgeschiedene, überschüssige Suspension (2.2); und
- mit Mitteln (9) zum Erzeugen eines Unterdrucks im Behälter (3);
**dadurch gekennzeichnet,**
**dass** der Überlauf (19, 19.1 bis 19.n) als mindestens ein in der Behälteraußenwand (3b) angebrachter und vorzugsweise parallel zur Behälterachse (3a) verlaufender Überlauf (19, 19.1 bis 19.n) mit einer Überlaufkante (20, 20.1 bis 20.n) ausgebildet ist und
**dass** dem Überlauf (19, 19.1 bis 19.n) mindestens ein Überlaufsystem (21) zur Abführung der abgeschiedenen, überschüssigen Suspension (2.2) nachgeordnet ist.

2. Vorrichtung (1) nach Anspruch 1,
**dadurch gekennzeichnet, dass**
der in der Behälteraußenwand (3b) angebrachte Überlauf (19, 19.1 bis 19.n) im wesentlichen umlaufend am Behälter (3) angebracht ist.

3. Vorrichtung (1) nach Anspruch 1 oder 2,
**dadurch gekennzeichnet, dass**
der Überlauf (19, 19.1 bis 19.n) im oder annähernd im Bereich der Austrittsöffnung (16) für die gasfreie Suspension (2.1) in der Behälteraußenwand (3b) ausgebildet ist.

4. Vorrichtung (1) nach Anspruch 3,
**dadurch gekennzeichnet, dass**
der Überlauf (19, 19.1 bis 19.n) mittig zur Austrittsöffnung (16) für die gasfreie Suspension (2.1) in der Behälteraußenwand (3b) ausgebildet ist.

5. Vorrichtung (1) nach einem der vorhergehenden Ansprüche,
**dadurch gekennzeichnet, dass**
der Überlauf (19, 19.1 bis 19.n) in Form von mindestens zwei Einzelüberläufen (19.1 bis 19.n) beidseitig in der Behälteraußenwand (3b) mit mindestens je einer Einzelüberlaufkante (20.1 bis 20.n) ausgebildet ist.

6. Vorrichtung (1) nach einem der vorhergehenden Ansprüche,
**dadurch gekennzeichnet, dass**
der Überlauf (19, 19.1 bis 19.n) eine Überlaufkante (20, 20.1 bis 20.n) mit einer Gesamt-Überlaufkantenlänge (L_{ÜG}) im Bereich von 1 m bis 10 m, vorzugsweise von 2 m bis 7 m, aufweist.

7. Vorrichtung (1) nach einem der vorhergehenden Ansprüche,
**dadurch gekennzeichnet, dass**
der Überlauf (19, 19.1 bis 19.n) eine offene Gesamt-Überlauffläche (F_{ÜG}) im Bereich von 0,3 m² bis 6 m², vorzugsweise von 0,4 m² bis 5 m², aufweist.

8. Vorrichtung (1) nach einem der vorhergehenden Ansprüche,
**dadurch gekennzeichnet, dass**
die Überlauffläche (F_{Ü1}, F_{Ü2}) des Einzelüberlaufs (19.1 bis 19.n) die Form eines Rechtecks, eines Kreises, eines Ovals oder eines regelmäßigen oder eines unregelmäßigen Polygons aufweist.

9. Vorrichtung (1) nach einem der vorhergehenden Ansprüche,
**dadurch gekennzeichnet, dass**
mehrere Überlaufflächen (F_{Ü1}, F_{Ü2}), insbesondere Kreise, von Einzelüberläufen (19.1 bis 19.n) in vorzugsweise regelmäßigen Abständen (A) (Teilungen) voneinander entlang einer Mittellinie (M) in der Behälteraußenwand (3b) ausgebildet sind.

10. Vorrichtung (1) nach einem der Ansprüche 5 bis 9,
**dadurch gekennzeichnet, dass**
die Einzelüberläufe (19.1 bis 19.n) einzeln oder gruppenweise oder sektioniert direkt mittels mindestens eines Überlaufrohrs oder mittels mindestens einer in der Behälteraußenwand (3b) mittels mindestens einer als Halbschale ausgebildeten Überlaufkammer und mindestens einem nachgeordneten Überlaufrohr in das vorzugsweise unterhalb des Behälters (3) angeordnete Überlaufsystem (21) einmünden.

11. Vorrichtung (1) nach einem der vorhergehenden Ansprüche,
**dadurch gekennzeichnet, dass**
der Austrittsöffnung (16) für die gasfreie Suspension (2.1) -in Strömungsrichtung der gasfreien Suspension (2.1) gesehen- ein hydraulischer Stabilisator nachgeordnet ist.

12. Vorrichtung (1) nach einem der vorhergehenden Ansprüche,
**dadurch gekennzeichnet, dass**
die Mittel (9) zum Erzeugen des Unterdrucks im Behälter (3) je ein Unterdruckanschluss (10), je eine Unterdruckleitung (11) und mindestens eine Unterdruckpumpe (12) mit Leitung (13) sind und vorzugsweise im oberen innenbereich des Behälters (3) angebracht sind.

13. Vorrichtung (1) nach einem der vorhergehenden Ansprüche,
**dadurch gekennzeichnet, dass**
im oberen Innenbereich des Behälters (3) mehrere Düsen (14) zur Anfeuchtung der nicht mit der Suspension (2) berührten Behälterinnenoberfläche (15) angebracht sind.

14. Vorrichtung (1) nach einem der vorhergehenden Ansprüche,
**dadurch gekennzeichnet, dass**
das Verteilungsrohr (4) zu der Behälterachse (3a) parallel oder annähernd parallel und außerhalb des Behälters (3) liegt.

15. Vorrichtung (1) nach einem der Ansprüche 1 bis 13,
**dadurch gekennzeichnet, dass**
das Verteilungsrohr (4) zu der Behälterachse (3a) parallel oder annähernd parallel und innerhalb des Behälters (3) liegt.

16. Verfahren zum Entgasen von Suspension (2), insbesondere von Faserstoffsuspension, wobei einem unter Unterdruck stehenden Behälter (3) Suspension (2) zugeführt wird und gasfreie Suspension (2.1) vorzugsweise im mittleren Bereich des Behälters (3), abgeschiedenes Gas (7) vorzugsweise im oberen Innenbereich des Behälters (3) und abgeschiedene, überschüssige Suspension (2.2) über mindestens einen Überlauf (19, 19.1 bis 19.n) abgeführt wird,
**dadurch gekennzeichnet, dass**
die abgeschiedene, überschüssige Suspension (2.2) seitlich über einen in der Behälteraußenwand (3b) angebrachten und vorzugsweise parallel zur Behälterachse (3a) verlaufenden Überlauf (19, 19.1 bis 19.n) mit einer Überlaufkante (20, 20.1 bis 20.n) abgeführt wird.

## Claims

1. Device (1) for degassing suspension (2), in particular fibrous suspension, comprising
- a preferably elongated and horizontal cylindrical container (3) having a horizontal or approximately horizontal container axis (3a) and a container outer wall (3b);
- having at least one distribution pipe (4), preferably parallel or approximately parallel to the container axis (3a), which is located outside or inside the container (3) and from which at least one jet pipe (5), preferably a plurality of successive jet pipes (5), for introducing suspension (2) into the container (3) originates, and/or having at least one chamber (22) communicating with the container (3) and supplying it with suspension (2), the communicating chamber (22) being located substantially above the liquid level (6) of the supplied suspension (2) in the container (3);
- having at least one outlet opening (16) preferably fitted in the central region of the container (3) for at least one gas-free suspension (2.1);
- having at least one outlet opening (16.1, 18) in each case for at least one separated gas (7) and for at least one excess suspension (2.2) separated out by means of at least one overflow (19, 19.1 to 19.n);
- having means (9) for producing a vacuum in the container (3);
**characterized in that**
the overflow (19, 19.1 to 19.n) is formed as at least one overflow (19, 19.1 to 19.n) fitted in the container outer wall (3b), preferably running parallel to the container axis (3a) and having an overflow edge (20, 20.1 to 20.n), and
**in that** the overflow (19, 19.1 to 19.n) is followed by at least one overflow system (21) for carrying away the separated excess suspension (2.2).

2. Device (1) according to Claim 1, **characterized in that** the overflow (19, 19.1 to 19.n) fitted in the container outer wall (3b) is fitted substantially circumferentially to the container (3).

3. Device (1) according to Claim 1 or 2, **characterized in that** the overflow (19, 19.1 to 19.n) is formed in or approximately in the region of the outlet opening (16) for the gas-free suspension (2.1) in the container outer wall (3b).

4. Device (1) according to Claim 3, **characterized in that** the overflow (19, 19.1 to 19.n) is formed centrally in relation to the outlet opening (16) for the gas-free suspension (2.1) in the container outer wall (3b).

5. Device (1) according to one of the preceding claims, **characterized in that** the overflow (19, 19.1 to 19.n) is constructed in the form of at least two individual overflows (19.1 to 19.n) on both sides in the container outer wall (3b), each having an individual overflow edge (20.1 to 20.n).

6. Device (1) according to one of the preceding claims, **characterized in that** the overflow (19, 19.1 to 19.n) has an overflow edge (20, 20.1 to 20.n) with a total overflow edge length (L_{ÜG}) in the range from 1 m to 10 m, preferably from 2 m to 7 m.

7. Device (1) according to one of the preceding claims, **characterized in that** the overflow (19, 19.1 to 19.n) has an open total overflow area (F_{ÜG}) in the range from 0.3 m² to 6 m², preferably from 0.4 m² to 5 m².

8. Device (1) according to one of the preceding claims, **characterized in that** the overflow area (F_{Ü1}, F_{Ü2}) of the individual overflow (19.1 to 19.n) has the shape of a rectangle, a circle, an oval or a regular or irregular polygon.

9. Device (1) according to one of the preceding claims, **characterized in that** a plurality of areas (F_{Ü1}, F_{Ü2}), in particular circles, of individual overflows (19.1 to 19.n) are formed at preferably regular intervals (A) (divisions) from one another along a centre line (M) in the container outer wall (3b).

10. Device (1) according to one of Claims 5 to 9, **characterized in that** the individual overflows (19.1 to 19.n) open into the overflow system (21) preferably arranged underneath the container (3), individually or in groups or in sections, directly by means of at least one overflow pipe or by means of at least one formed in the container outer wall (3b) by means of at least one overflow chamber formed as a half shell and at least one overflow pipe arranged downstream.

11. Device (1) according to one of the preceding claims, **characterized in that** the outlet opening (16) for the gas-free suspension (2.1) - viewed in the flow direction of the gas-free suspension (2.1) - has a hydraulic stabilizer arranged downstream.

12. Device (1) according to one of the preceding claims, **characterized in that** the means (9) for producing the vacuum in the container (3) are in each case a vacuum connection (11), in each case a vacuum line (10) and at least one vacuum pump (12) with line (13) and are preferably fitted in the upper inner region of the container (3).

13. Device (1) according to one of the preceding claims, **characterized in that** a plurality of nozzles (14) for moistening the inner surface (15) of the container not touched by the suspension (2) are fitted in the upper inner region of the container (3).

14. Device (1) according to one of the preceding claims, **characterized in that** the distribution pipe (4) is located parallel or approximately parallel to the container axis (3a) and outside the container (3).

15. Device (1) according to one of the preceding claims, **characterized in that** the distribution pipe (4) is located parallel or approximately parallel to the container axis (3a) and inside the container (3).

16. Method for degassing suspension (2), in particular fibrous suspension, a container (3) under vacuum being supplied with suspension (2) and gas-free suspension (2.1) being led away, preferably in the central region of the container (3), separated gas (7) being led away, preferably in the upper inner region of the container (3), and separated excess suspension (2.2) being led away via at least one overflow (19, 19.1 to 19.n), **characterized in that** the separated excess suspension (2.2) is led away laterally via an overflow (19, 19.1 to 19.n) fitted in the container outer wall (3b), preferably running parallel to the container axis (3a) and having an overflow edge (20, 20.1 to 20.n).

## Revendications

1. Dispositif (1) de dégazage de suspension (2), notamment de suspension fibreuse, se composant
- d'un récipient (3) de préférence longitudinal et cylindrique couché, avec un axe de récipient (3a) horizontal ou approximativement horizontal et une paroi extérieure de récipient (3b) ;
- avec au moins un tuyau de distribution (4) de préférence parallèle ou approximativement parallèle à l'axe de récipient (3a), qui se situe en dehors ou à l'intérieur du récipient (3) et duquel part au moins un tuyau à jet (5), de préférence une pluralité de tuyaux à jet successifs (5), pour l'alimentation de suspension (2) au récipient (3), et/ou avec au moins une chambre (22) communiquant avec le récipient (3) et lui fournissant de la suspension (2), la chambre communicante (22) se trouvant essentiellement au-dessus du niveau de liquide (6) de la suspension acheminée (2) dans le récipient (3) ;
- avec au moins une ouverture de sortie (16) prévue de préférence dans la partie centrale du récipient (3), pour au moins une suspension exempte de gaz (2.1) ;
- avec au moins à chaque fois une ouverture de sortie (16.1, 18) prévue dans le récipient (3) pour au moins un gaz séparé (7) et pour au moins une suspension (2.2) en excès, séparée au moyen d'au moins un débordement (19, 19.1 à 19.n) ; et
- avec des moyens (9) pour produire une dépression dans le récipient (3);
**caractérisé en ce que**
le débordement (19, 19.1 à 19.n) est réalisé sous la forme d'au moins un débordement (19, 19.1 à 19.n) prévu dans la paroi extérieure du récipient (3b) et s'étendant de préférence parallèlement à l'axe du récipient (3a), avec une arête de débordement (20, 20.1 à 20.n), et
**en ce qu'**au moins un système de débordement (21) pour l'évacuation de la suspension en excès séparée (2.2) est placé après le débordement (19, 19.1 à 19.n).

2. Dispositif (1) selon la revendication 1,
**caractérisé en ce que**
le débordement (19, 19.1 à 19.n) prévu dans la paroi extérieure du récipient (3b) est essentiellement prévu sur le récipient (3) sur sa périphérie.

3. Dispositif (1) selon la revendication 1 ou 2,
**caractérisé en ce que**
le débordement (19, 19.1 à 19.n) est réalisé dans ou approximativement dans la région de l'ouverture de sortie (16) pour la suspension exempte de gaz (2.1) dans la paroi extérieure du récipient (3b).

4. Dispositif (1) selon la revendication 3,
**caractérisé en ce que**
le débordement (19, 19.1 à 19.n) est réalisé au centre par rapport à l'ouverture de sortie (16) pour la suspension exempte de gaz (2.1) dans la paroi extérieure du récipient (3b).

5. Dispositif (1) selon l'une quelconque des revendications précédentes,
**caractérisé en ce que**
le débordement (19, 19.1 à 19.n) est réalisé sous la forme d'au moins deux débordements individuels (19.1 à 19.n) des deux côtés dans la paroi extérieure du récipient (3b) avec au moins une arête de débordement individuelle respective (20.1 à 20.n).

6. Dispositif (1) selon l'une quelconque des revendications précédentes,
**caractérisé en ce que**
le débordement (19, 19.1 à 19.n) présente une arête de débordement (20, 20.1 à 20.n) avec une longueur totale d'arête de débordement (L_{ÜG}) dans la plage de 1 m à 10 m, de préférence de 2 m à 7 m.

7. Dispositif (1) selon l'une quelconque des revendications précédentes,
**caractérisé en ce que**
le débordement (19, 19.1 à 19.n) présente une surface de débordement totale (F_{ÜG}) dans la plage de 0,3 m² à 6 m², de préférence de 0,4 m² à 5 m².

8. Dispositif (1) selon l'une quelconque des revendications précédentes,
**caractérisé en ce que**
la surface de débordement (F_{Ü1}, F_{Ü2}) du débordement individuel (19.1 à 19.n) présente la forme d'un rectangle, d'un cercle, d'un ovale ou d'un polygone régulier ou irrégulier.

9. Dispositif (1) selon l'une quelconque des revendications précédentes,
**caractérisé en ce que**
plusieurs surfaces de débordement (F_{Ü1}, F_{Ü2}), notamment des cercles, de débordements individuels (19.1 à 19.n) sont réalisées à distances de préférence régulières (A) (divisions) les unes des autres le long d'un axe médian (M) dans la paroi extérieure du récipient (3b).

10. Dispositif (1) selon l'une quelconque des revendications 5 à 9,
**caractérisé en ce que**
les débordements individuels (19.1 à 19.n) débouchent dans le système de débordement (21) disposé de préférence en dessous du récipient (3), individuellement ou en groupes ou en sections, directement au moyen d'au moins un tube de débordement ou au moyen d'au moins une dans la paroi extérieure du récipient (3b) au moyen d'au moins une chambre de débordement réalisée en tant que demi-coque et d'au moins un tube de débordement placé après.

11. Dispositif (1) selon l'une quelconque des revendications précédentes,
**caractérisé en ce que**
l'ouverture de sortie (16) pour la suspension exempte de gaz (2.1), vu dans la direction de l'écoulement de la suspension exempte de gaz (2.1), est placée avant un stabilisateur hydraulique.

12. Dispositif (1) selon l'une quelconque des revendications précédentes,
**caractérisé en ce que**
les moyens (9) pour produire la dépression dans le récipient (3) sont respectivement un raccord de dépression (10), une conduite de dépression (11) et au moins une pompe à vide (12) avec une conduite (13) et sont de préférence montés dans la région intérieure supérieure du récipient (3).

13. Dispositif (1) selon l'une quelconque des revendications précédentes,
**caractérisé en ce que**
dans la région intérieure supérieure du récipient (3), sont installées plusieurs buses (14) pour l'humidification de la surface intérieure du récipient (15) qui n'est pas en contact avec la suspension (2).

14. Dispositif (1) selon l'une quelconque des revendications précédentes,
**caractérisé en ce que**
le tuyau de distribution (4) s'étend parallèlement ou approximativement parallèlement à l'axe du récipient (3a) et en dehors du récipient (3).

15. Dispositif (1) selon l'une quelconque des revendications 1 à 13,
**caractérisé en ce que**
le tuyau de distribution (4) s'étend parallèlement ou approximativement parallèlement à l'axe du récipient (3a) et à l'intérieur du récipient (3).

16. Procédé de dégazage de suspension (2), notamment de suspension fibreuse, dans lequel on alimente en suspension (2) un récipient (3) soumis à une dépression et la suspension exempte de gaz (2.1) est évacuée de préférence dans la région centrale du récipient (3), le gaz séparé (7) est évacué de préférence dans la région intérieure supérieure du récipient (3) et la suspension en excès séparée (2.2) est évacuée par le biais d'au moins un débordement (19, 19.1 à 19.n),
**caractérisé en ce que**
la suspension en excès séparée (2.2) est évacuée latéralement par le biais d'un débordement (19, 19.1 à 19.n) avec une arête de débordement (20, 20.1 à 20.n) prévu dans la paroi extérieure du récipient (3b) et s'étend de préférence parallèlement à l'axe du récipient (3a).
